# EUROPEAN PATENT APPLICATION

(11) **EP 2 060 543 A1**
(43) Date of publication of application: **20.05.2009**
(21) Application number: 08164162.3
(22) Date of filing: 11.09.2008
(51) Int. Cl.: C02F 9/00, C02F 3/12, C02F 3/28

(54) **Sewer water recovery system**

(30) Priority: 09.11.2007 BR 704203
(71) Applicant: Barbosa da Silva, Paulo Roberto, 24230-065 Niterói (BR)
(72) Inventor: Barbosa da Silva, Paulo Roberto, 24230-065, Niterói (BR); Rodrigues dos Santos, Alexandre, 24220-420, Niterói (BR)
(74) Representative: Carpintero Lopez, Francisco

(57) **Abstract**

An integrated effluent treatment apparatus comprising one homogenizing tank comprising a siphon box and junction boxes, a second homogenizing tank provided with baffles, an ascending flow anaerobic reactor, a biodigestor, a water reuse set including pebble, dolomite, coal and sand filter and a UV disinfection.

## Description

### FIELD OF THE INVENTION

This invention refers in general to the field of sewer treatment generated in buildings, industries, residential and/or commercial/mixed agribusinesses to reuse the water recovered by the system.

### GROUNDS OF THE INVENTION

The management of water resources today is based on two key words: conservation and reuse. In terms of conservation, the population has a culture of plenty of water.

**Reuse of water.** Although the reuse of water is not instituted in Brazil only the municipalities of São Paulo and Curitiba are provided with legislation for the reuse of water (not duly regulated yet), there is a promising field for the reutilization of such reuse water. Both the domestic sewer and the industrial/agricultural ones may be used to obtain reused water. When we say the word reuse, we do not imply the sewer water, but also the second quality waters as well, which are the brackish waters, which are not as salty as the sea water.

When people think of reuse, they think that they have to treat the water up to the level of fresh water, but it is not so. The term use and the term quality can be related; the water is treated to meet the requirement of a certain use and no more, because it is not economical to treat the water more than that use requires. For example, when a sewer is treated for irrigation, one does not want to remove the organic matter and the nutrients, the humus fertilizing the soil.

The scientific development propitiates new technical procedures enabling the continuing improvement in all areas of mankind's continuous circle. Hence, the experts have been striving to seek new technologies, and consequently, new equipment to decrease the cost of the materials and the prices in the final product.

The implantation of the sanitary sewers treatment system with the reutilization of the waste waters is intended to avoid mainly: soil contamination; the construction of bigger and bigger sewer treatment stations - ETS's and economy for those using that system.

Generally speaking, the professionals working in the sanitation area have been developing projects seeking to improve the sewer treatment systems, presenting simple and economic solutions, such as the water reuse, giving to the public power and to the private initiative mechanisms to install good systems in their works.

The water reutilization or reuse is the process by which the water, whether it is treated or not, is reused for the same purpose of for another purpose. Such reutilization may be direct or indirect, resulting from planned actions or otherwise.

The purposes of reutilization are to protect the public health, to maintain the eco-systems' integrity and the sustained use of water.

The truth is that a general mobilization is noticed in the press, in the governments, in the civil society, for the theme of water scarcity. Low or even poor tariffs prevent the supply companies from capitalizing themselves, to expand the system, to fight the chronic leaks existing in the hydraulic systems (maintenance) and also, they stimulate the waste that remains almost always generalized in homes, in industries, in agriculture. They also hinder the construction of ETS's, Sewers Treatment Stations, essential both for health and economy, since today's sewer is tomorrow's fresh water.

This scene adds up leading to a nearby horizon with a higher raising of the water tariffs, because impounding more and more apart from the water treatment stations shall be required, and a more and more higher expenditure of the water companies with chemicals shall occur; thus an increase of the economic feasibility of the waters reuse for selected purposes shall occur.

The idea of adequacy to the use is behind the concept of reutilization; therefore, the water quality becomes the compliance with the parameters intended to a preset use, that is, for less noble uses of the water (yard washing, car washing, water for sanitary flushes, etc.) we should use water with a rating meeting such uses, if the uses are more noble ones (water ingestion, bath, etc.) we shall use water with a more noble rating.

### SUMMARY OF THE INVENTION

The technology proposed herein may be applied in urban or rural areas, in domestic or agribusiness sewers treatment, in swine farms, refrigerating chambers, slaughterhouses and similar, thus avoiding the aggression caused by such activities in the environment.

The integrated system proposed herein groups components already existing, so that the result obtained by this integrated system provides a higher efficiency in the sewer treatment both in the reuse water quality and in the economicity, decreasing the water consumption as a whole.

With the integrated system proposed herein we go beyond a simple sewer treatment to reach the reuse water under reutilization conditions in the enterprise itself (yard washing, toilets flushing, etc.) or in conditions of returning to nature, many times clearer than when it was impounded.

Whenever possible, the force of gravity replaces the utilization of pressure pumps with the utilization of the local topography with its declivities.

The integrated system of effluents treatment hereof comprises a homogenizing tank, an ascending flow anaerobic reactor, a set of reuse water and optionally a biodigestor and a laystall (depending on the application).

### BRIEF DESCRIPTION OF THE FIGURES

Figure 1 - A flow diagram of this invention's integrated system.
Figure 2 - A schematic view of the homogenization tank used in this invention's integrated system.

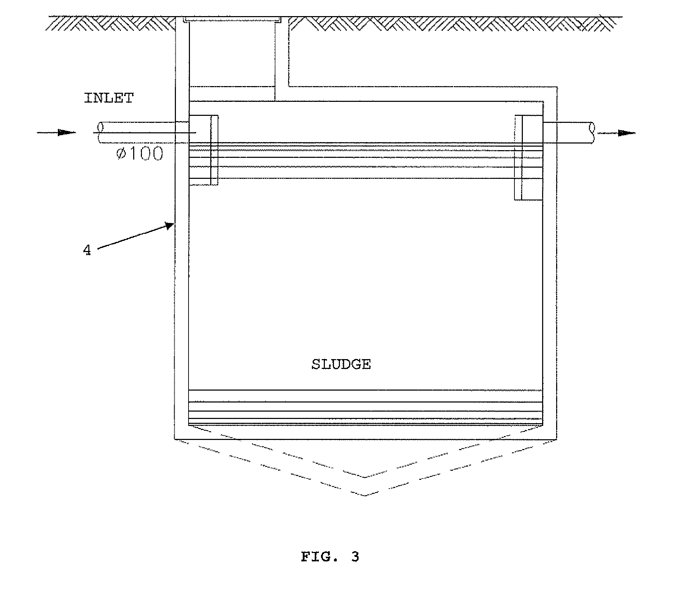

Figure 3 - A side cross-section view of the homogenization tank used in this invention.
Figure 4 - A side view cross-section of this invention's ascending flow anaerobic reactor.
Figure 5 - a plan view of this invention's reuse water system.
Figure 6 - a cross-section view in the A-A direction shown in Figure 5 of this invention's reuse water system.

### DETAILED DESCRIPTION OF THE INVENTION

The invention shall now be described on a generic basis regarding the effluents system in a multifamily residential building. Although this invention may be adapted for use in any other effluents system, such as for example, a swine farm, and those experienced in the technique will know how to make the due changes without breaking away from the scope of this invention's precepts.

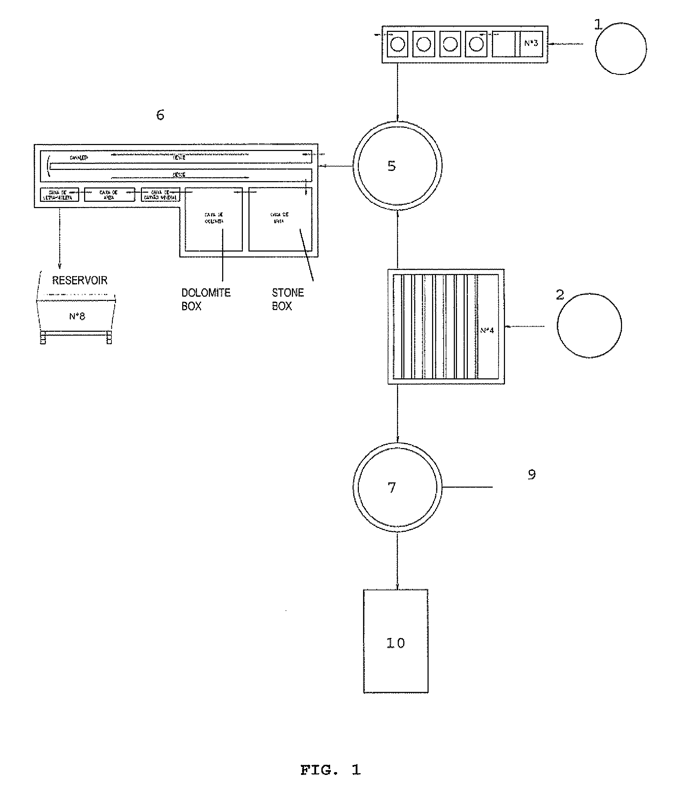

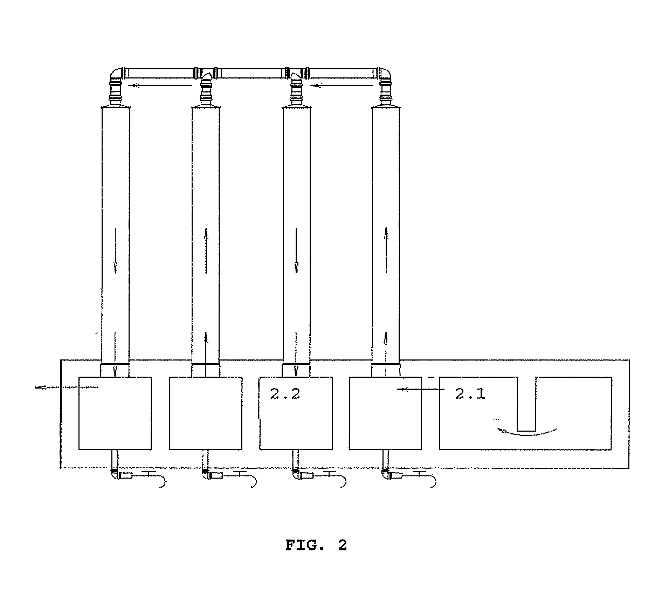

According to Figure 1, the secondary sewer effluents (tank waters, washing machines, shower boxes and lavatories) of a building are flushed by the pipeline into a passage box 1. From the passage box 1, the secondary sewer effluent goes to the tubular homogenizing tank 3 to flocculate and decant. According to Figure 2, the homogenizing tank 3 is comprised of a retainer siphon box 2.1 where the effluent is collected, and then it goes in ascending flow through the filter battery 2.2 intended to arrest the solid particles.

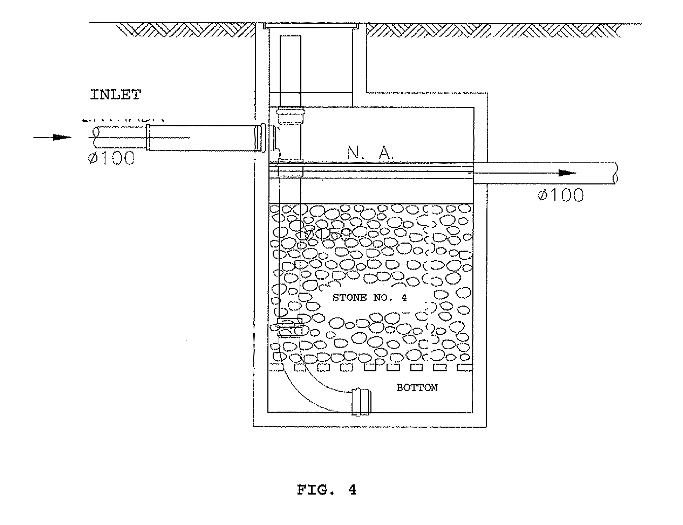

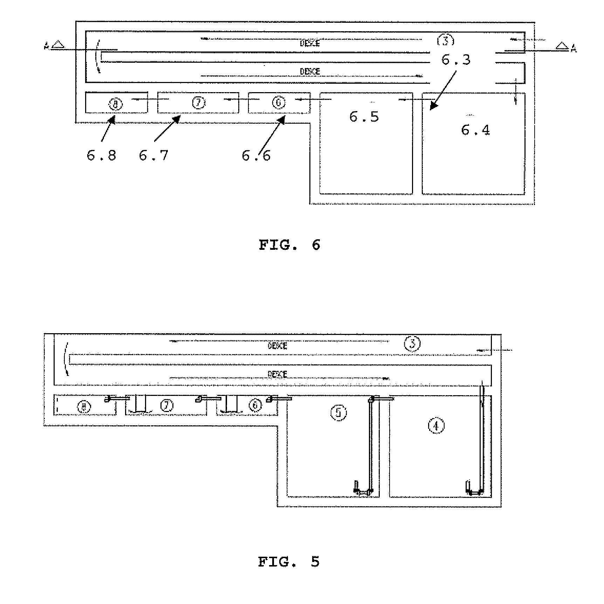

Also according to Figure 1, after leaving the tubular homogenizing tank 3 the effluent goes to the ascending filter anaerobic reactor 5 (illustrated in a cross-section in Figure 4) for pebble-filtering. Next, the effluent goes to the reuse water treatment set 6. The reuse water treatment set is illustrated in Figures 5 and 6 and is comprised of gutters 6.3 where the effluent flows up to the pebble box 6.4 and thence to the dolomite box 6.5. From the dolomite box 6.5 the effluent goes to the coal box 6.6 and sand box 6.7, and thence to the ultraviolet box 6.8 for sterilization. Upon leaving the ultraviolet box 6.8 the water is already in condition to be reused and goes to the tank 8.

Returning to Figure 1, in the case of the invention hereof is also connected to a primary sewer passage box (waste waters from toilet bowls), this passage box 2 guides the sewer to the homogenization tank with baffles 4 which is intended to decant the effluent coming from the passage box 2. From this homogenizing tank with baffles 4, the liquid effluent goes to the ascending filter anaerobic reactor 5 to be changed into reuse water, as it was already been explained. The solid mass decanted in the homogenization tank 4 goes to the biodigestor 7, where the methane gas generated by the organic matter decomposition may be used; and from that biodigestor 7 the organic matter decomposed after the gas generation shall be changed into liquid bio-fertilizer or solid fertilizer.

## Claims

1. A sewer water recovery system comprising homogenization tank, biodigestor and ascending flow anaerobic reactor, **characterized by** the fact of:
the homogenization tank (3) comprises siphon box (2.1) connected to the junction boxes (2.2) with pipes vertically installed in them and the last junction box (2.2) connected to the anaerobic reactor;
the homogenization tank (4) is internally provided with baffles for the deposited mud flow and side opening in the tank for water flow;
the water reuse set (6) comprises gutters (6.3) where the effluent flows down to the pebble box (6.4) and thence to the dolomite box (6.5) and from the dolomite box (6.5)the effluent goes to the coal box (6.6) and sand box (6.7), and thence to the ultraviolet box (6.8).

2. A system, according to claim 1, **characterized by** the fact that the homogenization tank (4) is connected to a biodigestor (7).
